# EUROPÄISCHE PATENTSCHRIFT

(11) **EP 2 023 058 B1**
(45) Veröffentlichungstag und Bekanntmachung des Hinweises auf die Patenterteilung: **23.09.2015**
(21) Anmeldenummer: 07405219.2
(22) Anmeldetag: 26.07.2007
(51) Int. Cl.: F24D 17/00, F16L 39/00, F24H 9/12

(54) **Anschlussstück für einen eine Innenzirkulationsleitung aufweisenden Flüssigkeitskreislauf einer Brauchwasser- oder Heizwasserversorgungsanlage, Leitungsanordnung mit einem solchen Anschlussstück und Verfahren zum Montieren einer solchen Leitungsanordnung**
Connecting piece for the fluid circulation with inner circulation pipe for a service water or heating water supply facility, pipe assembly with such a connecting piece and method for assembling such a pipe assembly
Elément de raccordement pour un circuit de liquide comportant une conduite de circulation interne d'une installation d'alimentation en eaux usées ou en eau chaude, installation de conduite dotée d'un tel élément de raccord et procédé destiné à monter une telle installation de conduite

(43) Veröffentlichungstag der Anmeldung: 11.02.2009
(73) Patentinhaber: Geberit International AG, 8645 Jona (CH)
(72) Erfinder: Schüpbach, Michael, 8713 Uerikon (CH); Doerr, Martin, 72514 Inzigkofen (DE); Pfeiffer, Uwe, 13125 Berlin (DE); Keine, Ulrich, 57439 Attendorn (DE)
(74) Vertreter: Frischknecht, Harry Ralph

(56) Entgegenhaltungen:
- EP-A- 0 997 690
- WO-A-02/081978
- DE-C1- 4 331 194

## Beschreibung

Die Erfindung betrifft ein Anschlussstück nach dem Oberbegriff des Anspruchs 1.

Ein Anschlussstück dieser Art ist im Stand der Technik aus der EP-A-0 299 471 bekannt geworden. Dieses ist als T-Stück ausgebildet. Ein sich horizontal erstreckender Stutzen dient zum Anschliessen der Zulaufleitung, mit welcher Warmwasser der Steigleitung zuführbar ist. Ein nach oben gerichteter Stutzen dient zum Anschliessen der Steigleitung, die als Doppelleitung ausgebildet ist. Ein weiterer Stutzen dient zudem für die Durchführung der Innenzirkulationsleitung durch das T-Stück. Ein in der Steigleitung verlaufendes Zirkulationsrohr führt bis etwa zur Höhe der letzten Etage eines Gebäudes und ermöglicht mittels einer ständig arbeitenden Pumpe eine Zirkulation von Warmwasser. Eine solche Leitungsanordnung hat den Vorteil, dass auch in höheren Etagen jederzeit und ohne Wasserverlust warmes Wasser zur Verfügung steht.

Ein weiteres Anschlussstück dieser Art ist aus der EP-A-0 665 408 bekannt geworden. Auch dieses ist als T- ausgebildet. Die Innenzirkulationsleitung ist ebenfalls durch das Anschlussstück hindurchgeführt und nach diesem mit einem Winkelstück mit einem horizontal verlaufenden Leitungsrohr verbunden, das an die Pumpe angeschlossen ist.

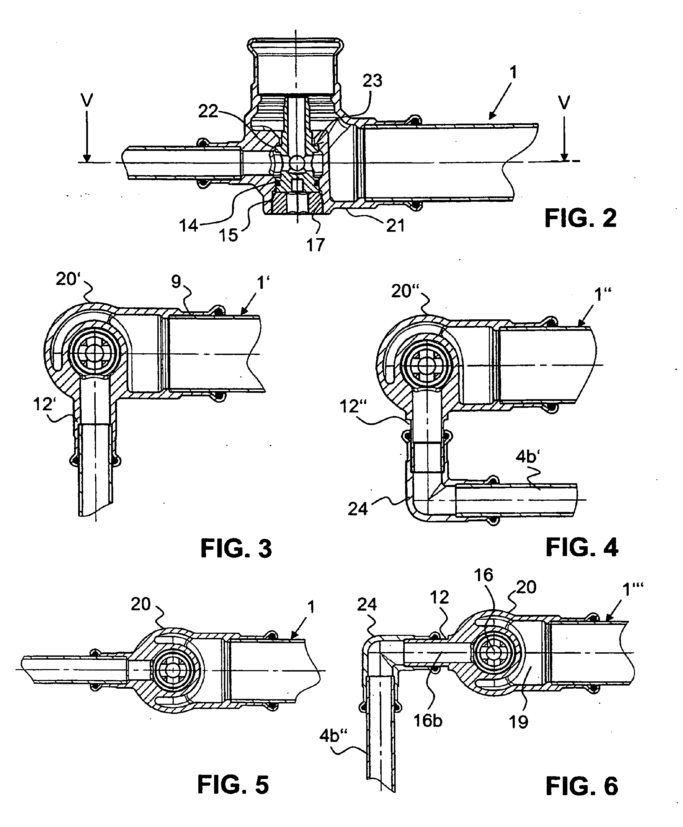

Die EP-A-0 997 690 offenbart ein Rohrsystem mit einer Zuleitung und einer zu einem Warmwassererzeuger zurückführenden Zirkulationsleitung. Die Fig. 4 zeigt einen als T-Stück ausgebildeten Fitting, an den mittels Rohrmuffen drei Doppelrohre zur Bildung einer Rohrabzweigung angeschlossen sind.

Der Erfindung liegt die Aufgabe zu Grunde, ein Anschlussstück der genannten Art zu schaffen, das eine noch einfachere und schnellere Montage ermöglicht.

Die Aufgabe ist bei einem gattungsgemässen Anschlussstück gemäss Anspruch 1 gelöst. Beim erfindungsgemässen Anschlussstück ist somit ein Anschlussstutzen für einen in der Steigrohrleitung verlaufendes Leitungsrohr und ein weiterer Anschlussstutzen für ein wegführendes Leitungsrohr der Innenzirkulationsleitung vorgesehen. Ein wesentlicher Vorteil eines solchen Anschlussstückes besteht darin, dass ein Todraum vermieden werden kann. Ein weiterer wesentlicher Vorteil besteht darin, dass das Anschlussstück bei gleichem Konstruktionsprinzip für verschiedene Ausrichtungen der Rohrleitungen ausgebildet werden kann. Es ist insbesondere eine Ausführung möglich, bei welcher der Anschluss für das Wegführende Leitungsrohr der Innenzirkulationsleitung horizontal verläuft. Die Anschlüsse für die Zulaufleitung, die Steigleitung und die wegführende Innenzirkulationsleitungen können auch jeweils rechtwinklig zueinander bzw. ähnlich wie bei einem rechtwinkligen Koordinatensystem angeordnet sein. Dies ermöglicht eine besonders Kompakte Ausführung. Das erfindungsgemässe Anschlussstück kann zudem aus vergleichsweise wenigen Teilen hergestellt werden.

Nach einer Weiterbildung der Erfindung ist der vierte Anschlussstutzen an einem Einsatz angeordnet, der in eine Bohrung eines Gehäuses eingesetzt ist. Ist dieser Einsatz von unten in das Gehäuse eingesetzt, so kann das in der Steigleitung verlaufende Leitungsrohr von oben in die Steigleitung eingesetzt und nach unten ein- und ausgebaut werden. Dies ermöglicht eine besonders einfache Montage und ein einfaches Revidieren bzw. Ersetzen der Innenleitung des Steigrohres. Vorzugsweise besitzt dieser Einsatz einen Durchgang, in welchem das Wasser der Innenzirkulation um 90° umgelenkt wird. Die wegführende Leitung der Innenzirkulationsleitung kann dann nach dem Anschlussstück somit horizontal verlaufen. Der Raum unterhalb des Anschlussstückes ist dann somit frei. Dies ermöglicht einen kleinen Bauraum.

Nach einer Weiterbildung der Erfindung ist wenigstens einer der Anschlussstutzen für eine Pressverbindung ausgebildet. Vorzugsweise sind der erste Anschlussstutzen, der zweite Anschlussstutzen und der vierte Anschlussstutzen für das Herstellen jeweils einer Preisverbindung ausgebildet.

Die Erfindung betrifft zudem eine Leitungsanordnung mit einem erfindungsgemässen Anschlussstück sowie ein Verfahren zum Montieren einer solchen Leitungsanordnung. Bei diesem weist die Innenzirkulationsleitung ein im Steigrohr verlaufendes Leitungsrohr auf, das mit dem dritten Anschlussstutzen verbunden ist. Die Verbindung dieses Leitungsrohres mit dem dritten Anschlussstück kann beispielsweise eine Schraubverbindung oder Pressverbindung sein. Weitere Vorteilhafte Merkmale ergeben sich aus den abhängigen Patentansprüchen, der nachfolgenden Beschreibung sowie der Zeichnung.

Es zeigen:
- Figur 1: einen Vertikalschnitt durch ein Anschlussstück mit abschnittweise gezeigten angeschlossenen Leitungsrohren,
- Figur 2: ein Vertikalschnitt durch das erfindungsgemässe Anschlussstück, wobei die Steigrohrleitung weggelassen ist,
- Figur 3: ein horizontaler Schnitt durch ein Anschlussstück gemäss einer Variante,
- Figur 4: ein horizontaler Schnitt durch ein erfindungsgemässes Anschlussstück gemäss einer weiteren Variante,
- Figur 5: ein Schnitt durch das erfindungsgemässe Anschlussstück entlang der Linie V - V der Figur 2 und
- Figur 6: ein horizontaler Schnitt durch ein erfindungsgemässes Anschlussstück gemäss einer weiteren Variante.

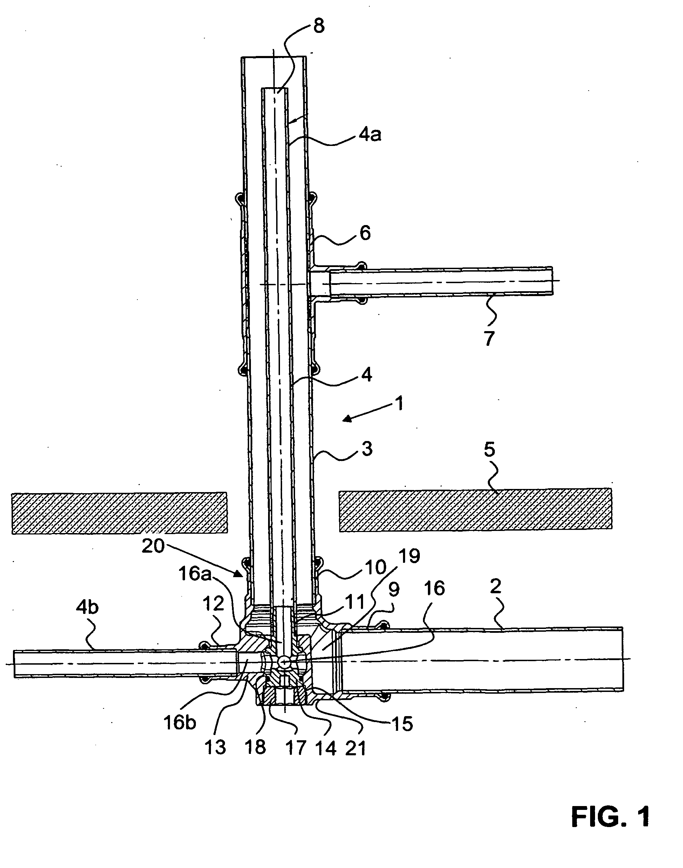

Die Figur 1 zeigt eine Leitungsanordnung 1, die ein Anschlussstück 20 besitzt, an dem eine Zulaufleitung 2, eine Steigleitung 3 und eine Innenzirkulationsleitung 4 angeschlossen sind. Die Zulaufleitung 2 ist an einem hier nicht gezeigten Warmwasserboiler einer Heizungsanlage angeschlossen. Durch diese Zulaufleitung 2 und durch einen Durchgang 19 im Anschlussstückes 20 kann der Steigleitung 3 Warmwasser zugeführt werden. Die Steigleitung 3 führt beispielsweise von einem Kellergeschoss durch einen Gebäudeboden 5 vertikal nach oben über mehrere Etagen eines Gebäudes. In jeder Etage kann die Steigleitung 3 über jeweils ein T-Stück 6 mit einer Leitung 7 verbunden sein, an der beispielsweise ein Wasserhahn oder ein Heizkörper angeschlossen ist. In der Figur 1 ist lediglich ein T-Stück 6 gezeigt. In der Regel sind aber entsprechend der Anzahl der Etagen mehrere solche T-Stücke 6 im Abstand zu einander an der Steigleitung 3 angeschlossen. An das Anschlussstück 20 sind zudem ein Leitungsrohr 4a sowie ein Leitungsrohr 4b der Innerzirkulationsleitung 4 angeschlossen. Das Leitungsrohr 4a verläuft vertikal und besitzt am oberen Ende eine Öffnung 8, durch die bei geschlossenem Leitungssystem Wasser in das Leitungsrohr 4a und über einen Durchgang 16 des Anschlussstückes 20 in das Leitungsrohr 4b gelangen kann. Das Leitungsrohr 4b bildet eine Rücklaufleitung und ist an eine hier nicht gezeigte Pumpe angeschlossen, sodass das in der Innenzirkulationsleitung 4 zirkulierende Wasser wieder dem Warmwasserboiler zugeführt werden kann. Ist die Pumpe ständig im Betrieb, so wird ein Strömungskreislauf aufrechterhalten, bei dem warmes Wasser in der Steigleitung 3 nach oben strömt und dann von der Öffnung 8 im Leitungsrohr 4a nach unten und durch den Durchgang 16 in das Leitungsrohr 4b und schliesslich wieder in den Warmwasserboiler gelangt. Damit kann sichergestellt werden, dass auch bei einem hohen Gebäude mit mehreren Stockwerken in jedem Stockwerk sofort Warmwasser zur Verfügung steht. Wird beispielsweise ein Wasserhahn geöffnet, so kann sofort warmes Wasser aus diesem bezogen werden.

Das Anschlussstück 20 besitzt ein Gehäuse 13, das beispielsweise aus einem geeigneten Metall hergestellt ist und das eine Bohrung 15 aufweist, in die ein Einsatz 14 eingesetzt ist. Mit einer Dichtung 18 ist dieser Einsatz 14 gegenüber dem Gehäuse 13 abgedichtet. Der Einsatz 14 ist von einer Unterseite 21 des Anschlussstückes 20 in dieses eingesetzt. Mittels einer Mutter 17, welche in die Bohrung 15 eingeschraubt ist, ist der Einsatz 15 lösbar fixiert. Die Mutter 17 kann aus dem Gehäuse 13 herausgeschraubt werden. Nachher ist der Einsatz 14 frei und kann nach unten aus der Bohrung 15 herausgenommen werden.

Der Einsatz 14 besitzt an einem oberen Ende einen Anschlussstutzen 11, an dem das untere Ende des Leitungsrohres 4a angeschlossen ist. Die Verbindung zwischen dem Anschlussstutzen 11 und dem Leitungsrohr 4a kann an sich beliebig sein. Denkbar ist hier beispielsweise eine Schraubverbindung oder auch eine Pressverbindung. Im Anschlussstutzen 11 verläuft vertikal ein erster Ast 16a des Durchgangs 16. Am unteren Ende dieses Astes 16a wird das durchströmende Wasser um 90 Grad umgelenkt und verläuft dann in einem zweiten Ast 16b horizontal in das Leitungsrohr 4b, das an einem weiteren Anschlussstutzen 12 angeschlossen ist. Der Anschlussstutzen 12 erstreckt sich wie ersichtlich horizontal vom Gehäuse 13 aus nach aussen. Die Achse der Zulaufleitung 2 ist wie ersichtlich ebenfalls die Achse des Leitungsrohres 4b.

Der Anschlussstutzen 12, in den wie ersichtlich ein Ende des Leitungsrohres 4b eingesetzt ist, ist vorzugsweise so ausgebildet, dass das Leitungsrohr 4b mit einer Pressverbindung mit dem Anschlussstück 20 verbunden werden kann. Solche Pressverbindungen sind an sich bekannt. Alternativ zu einer solchen Pressverbindung ist aber auch eine andere Verbindung, beispielsweise eine Schraubverbindung oder dergleichen denkbar. Dies gilt ebenfalls für einen weiteren Anschlussstutzen 9, mit dem die Zulaufleitung 2 mit dem Anschlussstück 20 verbunden ist. Dies gilt zudem für einen weiteren Anschlussstutzen 10 welcher die Steigleitung mit dem Anschlussstück 20 verbindet. Vorzugsweise sind die genannten Anschlussstutzen 9, 10 und 12 zum Herstellen einer Pressverbindung ausgebildet. Grundsätzlich ist aber auch eine Ausführung denkbar, bei welcher lediglich eine oder auch keine Verbindung als Pressverbindung vorgesehen ist.

Das Leitungsrohr 4a besitzt wie ersichtlich einen Aussendurchmesser, der wesentlich kleiner ist als der Aussendurchmesser der Steigleitung 3. Es kann aus Kunststoff hergestellt und flexibel sein. Das Einführen des Leitungsrohrs 4b erfolgt von oben in der Steigleitung 3 und kann nach dem Einführen mit dem Einsatz 14 verbunden, beispielsweise verschraubt oder verpresst werden. Das Leitungsrohr 4a kann ausgebaut werden, in dem die Mutter 17 herausgeschraubt wird. Der Einsatz 14 kann dann mit dem Leitungsrohr 4a aus der Bohrung 15 nach unten herausgezogen werden. Zum Montieren des Leitungsrohres 4a wird dieses zusammen mit dem Einsatz 14 durch die Bohrung 15 eingeschoben, bis eine umlaufende Rippe 22 des Einsatzes 14 an einer Schulter 23 der Bohrung 15 anliegt (Figur 2). Der Durchgang 16 ist dann innerhalb des Gehäuses 13 richtig positioniert. Nach dem Einschrauben der Mutter 17 ist diese Position fixiert. Die Montage und eine Revision des Leitungsrohres 4a ist somit sehr einfach.

Die Figur 3 zeigt eine Ausführung, bei welcher ein Anschlussstutzen 12' für das Leitungsrohr 4b vorgesehen ist, der gemäss Figur 3 rechtwinklig am Anschlussstuten 9 verläuft. Der hier nicht gezeigte Anschlussstutzen 10 erstreckt sich von der Ebene des Zeichnungsblattes vertikal nach oben. Die Anschlussstutzen 9, 10 und 12' bilden somit ein Dreibein in der Form des Ursprunges eines rechtwinkligen koordinaten Systems.

Die Figur 4 zeigt eine Leitungsanordnung 1" mit einem Anschlussstück 20", das einen Anschlussstutzen 12" besitzt, auf den ein Winkelstück 24 aufgesetzt ist, welches den Anschlussstutzen 12" mit einem Leitungsrohr 4b' verbindet. In diesem Fall ist somit das Leitungsrohr 4b' über das Winkelstück 24 am Anschlussstück 20" angeschlossen. Das Winkelstück 24 ist hier rechtwinklig, grundsätzlich sind hier aber auch andere Winkel denkbar. Die Verbindung zwischen dem Anschlussstutzen 12" und dem Winkelstück 24 ist wie der vorzugsweise eine Pressverbindung. Auch hier sind aber andere Verbindungen denkbar. Dies gilt auch für die Verbindung zwischen dem Winkelstück 24 und dem Leitungsrohr 4b'.

Die Figur 5 zeigt die Leitungsanordnung 1 gemäss den Figuren 1 und 2. Wie ersichtlich ist das Anschlussstück 20 im Wesentlichen als T-Stück 6 ausgebildet.

Die Figur 6 zeigt eine Leitungsanordnung 1"', die ein Anschlussstück 20 aufweist. Der Anschluss des Leitungsrohres 4b" an den Anschlussstutzen 12 erfolgt ebenfalls über ein Winkelstück 24. Das zirkulierende Wasser wird hier somit im Durchgang 19 vertikal nach oben und im Durchgang 16 von einer vertikalen in eine horizontale Richtung umgelenkt. Schliesslich erfolgt im Winkelstück 24 eine weitere Umlenkung um 90° in eine horizontalen Ebene. Bei diesen Umlenkungen kann bei Verwendungen des erfindungsgemässen Anschlussstücks 20 und auch bei den anderen Anschlussstücken 20' und 20" ein Totraum vermieden werden. Sämtliche Bereiche dieser Durchgänge sind somit bei ständig arbeitender Pumpe intensiv durchströmt.

Der Montagevorgang ist vergleichsweise einfach. Mit einer geeigneten Presszange werden bei der Leitungsanordnung 1 gemäss Figur 1 die Zulaufleitung 2, die Steigleitung 3 und das Leitungsrohr 4b mit dem Anschlussstück 20 verbunden. Das Leitungsrohr 4a wird nun von oben in die Steigleitung 3 eingeführt und von unten mit dem Einsatz 14 verbunden. Der Einsatz 14 wird dann von unten durch die Bohrung 15 eingeschoben bis die Rippe 22 an der Schulter 23 ansetzt. Nun wird die Mutter 17 in die Bohrung 15 eingeschraubt und damit der Einsatz 14 fixiert.

### Bezugszeichenliste

- 1: Leitungsanordnung
- 2: Zulaufleitung
- 3: Steigleitung
- 4: Innenzirkulationsleitung
- 4a: Leitungsrohr
- 4b: Leitungsrohr (Rücklaufleitung)
- 5: Gebäudeboden
- 6: T-Stück
- 7: Leitung
- 8: Öffnung
- 9: erster Anschlussstutzen
- 10: zweiter Anschlussstutzen
- 11: dritter Anschlussstutzen
- 12: vierter Anschlussstutzen
- 13: Gehäuse
- 14: Einsatz
- 15: Bohrung
- 16: Durchgang
- 16a: erster Ast
- 16b: zweiter Ast
- 17: Mutter
- 18: Dichtung
- 19: Durchgang
- 20: Anschlussstück
- 21: Unterseite
- 22: Rippe
- 23: Schulter
- 24: Winkelstück

## Patentansprüche

1. Anschlussstück für einen eine Innenzirkulationsleitung (4) aufweisenden Flüssigkeitskreislauf einer Brauchwasser- oder Heizwasserversorgungsanlage, mit einem ersten Anschlussstutzen (9) zum Anschliessen einer Zulaufleitung (2) und einem zweiten Anschlussstutzen (10) zum Anschliessen einer Steigleitung (3), wobei in der Steigleitung (3) ein Leitungsrohr (4a) einer Innenzirkulationsleitung (4) verläuft, die mit einem wegführenden Leitungsrohr (4b) der Innenzirkulationsleitung (4) für die Rückführung des in der Innenzirkulationsleitung (4) strömenden Wassers verbindbar ist, wobei im zweiten Anschlussstutzen (10) ein dritter Anschlussstutzen (11) zum Anschliessen des in der Steigrohrleitung (3) verlaufenden Leitungsrohres (4a) der Innenzirkulationsleitung (4) angeordnet ist und dass für den Anschluss des wegführenden Leitungsrohres (4b) der Innenzirkulationsleitung (4) ein vierter Anschlussstutzen (12) vorgesehen ist, und wobei das Anschlussstück ein Gehäuse (13) umfasst, **dadurch gekennzeichnet, dass** der vierte Anschlussstutzen (12) an einem Einsatz (14) angeordnet ist, der in eine Bohrung (15) des Gehäuses (13) eingesetzt ist.

2. Anschlussstück nach Anspruch 1, **dadurch gekennzeichnet, dass** es für die Innenzirkulation einen Durchgang (16) aufweist, in dem das Innenzirkulationswasser um etwa 90° umgelenkt wird.

3. Anschlussstück nach Anspruch 1 oder 2, **dadurch gekennzeichnet, dass** der vierte Anschlussstutzen (12) im montieren Zustand in einer horizontalen Ebene verläuft.

4. Anschlussstück nach einem der Ansprüche 1 bis 3, **dadurch gekennzeichnet, dass** der Einsatz (14) von einer Unterseite (21) des Gehäuses (13) in dieses eingesetzt ist.

5. Anschlussstück nach einem der Ansprüche 1 bis 4, **dadurch gekennzeichnet, dass** der Einsatz (14) für das Innenzirkulationswasser einen Durchgang (16) aufweist und dieser einen im montierten Zustand vertikalen Ast (16) aufweist.

6. Anschlussstück nach einem der Ansprüche 1 bis 5, **dadurch gekennzeichnet, dass** im montierten Zustand der erste Anschlussstutzen (9) und der vierte Anschlussstutzen (12) im Wesentlichen in der gleichen horizontalen Ebene verlaufen.

7. Anschlussstück nach Anspruch 6, **dadurch gekennzeichnet, dass** der erste Anschlussstutzen (9) und der vierte Anschlussstutzen im Wesentlichen rechtwinklig zueinander verlaufen.

8. Anschlussstück nach Anspruch 6, **dadurch gekennzeichnet, dass** der erste Anschlussstutzen (9) und der vierte Anschlussstutzen (12) im Wesentlichen auf der gleichen Achse verlaufen.

9. Leitungsanordnung mit einem Anschlussstück nach einem der Ansprüche 1 bis 8, mit einer Zulaufleitung (2), einer Steigleitung (3) und einer Innenzirkulationsleitung (4), **dadurch gekennzeichnet, dass** die Innenzirkulationsleitung (4) ein im Steigrohr (3) verlaufendes Leitungsrohr (4a) aufweist, das mit dem dritten Anschlussstutzen (11) verbunden ist.

10. Leitungsanordnung nach Anspruch 9, **dadurch gekennzeichnet, dass** die Zulaufleitung (2), die Steigleitung (3) und ein vom Anschlussstück (20) wegführender Teil (4b) der Innenzirkulationsleitung (4) jeweils rechtwinklig zueinander verlaufen.

11. Leitungsanordnung nach Anspruch 9 oder 10, **dadurch gekennzeichnet, dass** das in der Steigleitung (3) verlaufende Leitungsrohr (4a) von unten in das Anschlussstück (20) eingesetzt und nach unten aus diesem ausbaubar ist.

12. Verfahren zum Montieren einer Leitungsanordnung gemäss einem der Ansprüche 9 bis 11, **dadurch gekennzeichnet, dass** in einem ersten Schritt die Zulaufleitung (2), die Steigleitung (3) und Rücklaufleitung (4b) an das Anschlussstück (20) angeschlossen werden und dass in einem zweiten Schritt das Leitungsrohr (4b)) für die Innenzirkulation in der Steigleitung (3) von oben eingeführt und unten durch eine Bohrung (15) im Anschlussstück (20) mit dem Einsatz (14) verbunden wird.

## Claims

1. Connection piece for a liquid circuit which has an inner-circulation conduit (4) and belongs to a service-water-supply or heating-water-supply facility, having a first connection stub (9) for connection of a feed conduit (2) and a second connection stub (10) for connection of a riser (3), wherein the riser (3) has running within it a pipe (4a) of an inner-circulation conduit (4), which can be connected to an outgoing pipe (4b) of the inner-circulation conduit (4) for returning the water flowing in the inner-circulation conduit (4), wherein the second connection stub (10) has arranged within it a third connection stub (11) for connection of the pipe (4a) of the inner-circulation conduit (4), said pipe running within the riser (3), wherein a fourth connection stub (12) is provided for connection of the outgoing pipe (4b) of the inner-circulation conduit (4), and wherein the connection piece comprises a housing (13), **characterized in that** the fourth connection stub (12) is arranged on an insert (14), which is inserted into a bore (15) of the housing (13).

2. Connection piece according to Claim 1, **characterized in that**, for the inner circulation, it has a through-passage (16), in which the inner-circulation water is deflected through approximately 90°.

3. Connection piece according to Claim 1 or 2, **characterized in that** the fourth connection stub (12), in the installed state, runs in a horizontal plane.

4. Connection piece according to one of Claims 1 to 3, **characterized in that** the insert (14) is inserted into the housing (13) from an underside (21) of the same.

5. Connection piece according to one of Claims 1 to 4, **characterized in that** the insert (14) has a through-passage (16) for the inner-circulation water, and said through-passage has a branch (16) which, in the installed state, is vertical.

6. Connection piece according to one of Claims 1 to 5, **characterized in that**, in the installed state, the first connection stub (9) and the fourth connection stub (12) run essentially in the same horizontal plane.

7. Connection piece according to Claim 6, **characterized in that** the first connection stub (9) and the fourth connection stub run essentially at right angles to one another.

8. Connection piece according to Claim 6, **characterized in that** the first connection stub (9) and the fourth connection stub (12) run essentially along the same axis.

9. Conduit arrangement having a connection piece according to one of Claims 1 to 8, having a feed conduit (2), a riser (3) and an inner-circulation conduit (4), **characterized in that** the inner-circulation conduit (4) has a pipe (4a), which runs within the riser (3) and is connected to the third connection stub (11).

10. Conduit arrangement according to Claim 9, **characterized in that** the feed conduit (2), the riser (3) and a part (4b) of the inner-circulation conduit (4) which leads out from the connection piece (20) run at right angles to one another in each case.

11. Conduit arrangement according to Claim 9 or 10, **characterized in that** the conduit pipe (4a), which runs within the riser (3), is inserted into the connection piece (20) from beneath and can be removed from said connection piece in the downward direction.

12. Method of installing a conduit arrangement according to one of Claims 9 to 11, **characterized in that**, in a first step, the feed conduit (2), the riser (3) and return conduit (4b) are connected to the connection piece (20), and **in that**, in a second step, the conduit pipe (4b), for inner circulation, is introduced in the riser (3) from above and is connected to the insert (14) at the bottom through a bore (15) in the connection piece (20).

## Revendications

1. Élément de raccordement pour un circuit de liquide présentant une conduite de circulation interne (4) d'une installation d'alimentation en eaux usées ou en eau chaude, comprenant un premier raccord (9) pour le raccord d'une conduite d'amenée (2) et un deuxième raccord (10) pour le raccord d'une conduite montante (3), un tube de conduite (4a) d'une conduite de circulation interne (4) s'étendant dans la conduite montante (3), laquelle conduite de circulation interne peut être connectée à un tube de conduite partant (4b) de la conduite de circulation interne (4) pour le retour de l'eau s'écoulant dans la conduite de circulation interne (4), un troisième raccord (11) pour le raccord du tube de conduite (4a) de la conduite de circulation interne (4) s'étendant dans la conduite montante (3) étant disposé dans le deuxième raccord (10) et un quatrième raccord (12) étant prévu pour le raccord du tube de conduite partant (4b) de la conduite de circulation interne (4), et l'élément de raccordement comprenant un boîtier (13), **caractérisé en ce que** le quatrième raccord (12) est disposé au niveau d'un insert (14) qui est inséré dans un alésage (15) du boîtier (13).

2. Élément de raccordement selon la revendication 1, **caractérisé en ce qu'**il présente pour la circulation interne un passage (16) dans lequel l'eau de circulation interne est déviée d'environ 90°.

3. Élément de raccordement selon la revendication 1 ou 2, **caractérisé en ce que** le quatrième raccord (12), dans l'état monté, s'étend dans un plan horizontal.

4. Élément de raccordement selon l'une quelconque des revendications 1 à 3, **caractérisé en ce que** l'insert (14), depuis un côté inférieur (21) du boîtier (13), est inséré dans ce dernier.

5. Élément de raccordement selon l'une quelconque des revendications 1 à 4, **caractérisé en ce que** l'insert (14) pour l'eau de circulation interne présente un passage (16) et celui-ci présente une branche (16) verticale dans l'état monté.

6. Élément de raccordement selon l'une quelconque des revendications 1 à 5, **caractérisé en ce que** dans l'état monté le premier raccord (9) et le quatrième raccord (12) s'étendent essentiellement dans le même plan horizontal.

7. Élément de raccordement selon la revendication 6, **caractérisé en ce que** le premier raccord (9) et le quatrième raccord s'étendent essentiellement à angle droit l'un par rapport à l'autre.

8. Élément de raccordement selon la revendication 6, **caractérisé en ce que** le premier raccord (9) et le quatrième raccord (12) s'étendent essentiellement sur le même axe.

9. Agencement de conduites comprenant un élément de raccordement selon l'une quelconque des revendications 1 à 8, comprenant une conduite d'amenée (2), une conduite montante (3) et une conduite de circulation interne (4), **caractérisé en ce que** la conduite de circulation interne (4) présente un tube de conduite (4a) s'étendant dans la conduite montante (3), lequel est connecté au troisième raccord (11).

10. Agencement de conduites selon la revendication 9, **caractérisé en ce que** la conduite d'amenée (2), la conduite montante (3) et une partie (4b) de la conduite de circulation interne (4) partant de l'élément de raccordement (20) s'étendent à chaque fois à angle droit les unes par rapport aux autres.

11. Agencement de conduites selon la revendication 9 ou 10, **caractérisé en ce que** le tube de conduite (4a) s'étendant dans la conduite montante (3) est inséré par le bas dans l'élément de raccordement (20) et peut être démonté de celui-ci par le bas.

12. Procédé de montage d'un agencement de conduites selon l'une quelconque des revendications 9 à 11, **caractérisé en ce que** dans une première étape, la conduite d'amenée (2), la conduite montante (3) et la conduite de retour (4b) sont raccordées à l'élément de raccordement (20) et **en ce que** dans une deuxième étape le tube de conduite (4b) pour la circulation interne est introduit par le haut dans la conduite montante (3) et est connecté en bas par un alésage (15) dans l'élément de raccordement (20) à l'insert (14).
